# DEMANDE DE BREVET EUROPEEN

(11) **EP 1 477 058 A1**
(43) Date de publication de la demande: **17.11.2004**
(21) Numéro de dépôt: 04356055.6
(22) Date de dépôt: 23.04.2004
(51) Int. Cl.: A01K 55/00

(54) **Dispositif autonome permettant la surveillance a distance d'une ruche**

(30) Priorité: 14.05.2003 FR 0305784
(71) Demandeur: Robin, Hervé, 43000 Le Puy (FR)
(72) Inventeur: Robin, Hervé, 43000 Le Puy (FR)
(74) Mandataire: Maureau, Philippe

(57) **Abrégé**

Ce dispositif (1) permet la surveillance à distance d'une ruche. Il comprend un boîtier (8) formant un socle amovible pour la ruche et contenant des moyens de détection de paramètres physiques (10) caractéristiques à un instant donné de la ruche et/ou de son environnement, et en ce qu'il comprend d'une part des moyens (15) d'émission de données et/ou de réception de commandes, respectivement vers et/ou en provenance d'au moins un terminal de surveillance placé à distance, et d'autre part des moyens (13, 14) permettant son alimentation électrique autonome. Les moyens autonomes d'émission/ réception sont de préférence disposés dans le boîtier.

## Description

La présente invention concerne un dispositif permettant la surveillance d'une ruche à distance.

Pour un apiculteur, la surveillance d'une ruche et, a fortiori, d'un groupe de ruches est traditionnellement une activité fastidieuse. En effet, les ruches peuvent parfois être distantes de quelques dizaines voire centaines de kilomètres les unes des autres, et l'apiculteur ne sait pas a priori à quel moment il doit se rendre sur le rucher pour accroître la capacité de stockage de la ruche par ajout de hausses, procéder à des ajustements ou pour prélever la récolte de miel. En effet, les miellées sont aléatoires dans le temps, et dépendent de nombreux facteurs, parmi lesquels des facteurs dus à l'environnement direct de la ruche.

Avec le développement technologique, des systèmes ont été proposés, permettant à l'apiculteur de connaître à distance l'activité de la ruche, et surtout, lui permettant de déterminée lorsqu'une miellée a lieu.

Un tel système est notamment décrit dans la demande de brevet internationale WO 02/062133 A1. Cette demande de brevet décrit un système dans lequel des ruches proches les unes des autres à l'intérieur desquelles des capteurs sont disposés permettant de recueillir des données sur chaque ruche, et formant ainsi des stations secondaires, sont reliées à une station primaire qui contient un appareillage permettant le traitement des données recueillies et leur transmission à un terminal de commande situé à distance. On obtient ainsi un réseau de ruches, toutes reliées à une station de liaison au terminal de commande.

Si le système décrit dans cette demande de brevet apporte certains 25 avantages à l'apiculteur, il n'en reste pas moins un système très complexe, dans lequel les ruches doivent être au minimum modifiées pour disposer de capteurs et de moyens de transmission des données recueillies à la station de base. En outre, il est nécessaire d'installer une station faisant le lien entre chaque ruche de l'exploitation et le terminal de commande situé à distance.

Alors, un apiculteur qui souhaite s'équiper d'un tel système doit procéder à l'ouverture de toutes ses ruches pour mettre en place les capteurs et l'électronique de transmission à la station de base, puis faire réaliser l'installation de la station de base pour chaque groupe de ruches situées à proximité les unes des autres, et enfin, procéder au raccordement de chaque ruche formant station secondaire, à la station de base.

Il s'agit d'un procédé de surveillance de ruches non seulement traumatisant pour la colonie d'abeilles qui occupe la ruche, puisque du matériel électronique se trouve à l'intérieur de la ruche.et risque de les perturber, mais également un système coûteux et fastidieux à mettre en place.

En outre, en cas de panne d'un capteur, il est nécessaire d'ouvrir la ruche, voire de la retirer complètement du site sur lequel elle se trouve, afin de procéder à une maintenance ou à un remplacement de l'élément défectueux.

Le but principal de la présente invention est donc de fournir un dispositif permettant la surveillance d'au moins une ruche, et par extension d'un groupe de ruches, à partir d'un terminal de surveillance et commande situé à distance, et permettant de résoudre avantageusement les inconvénients cités ci-dessus.

Le but de l'invention est atteint avec un dispositif permettant la surveillance à distance d'une ruche, caractérisé en ce qu'il comprend un boîtier formant un socle amovible pour la ruche et contenant des moyens de détection de paramètres physiques caractéristiques à un instant donné de la ruche et/ou de son environnement, et en ce qu'il comprend d'une part des moyens d'émission de données et/ou de réception de commandes, respectivement vers et/ou en provenance d'au moins un terminal de surveillance placé à distance, et d'autre part des moyens permettant son alimentation électrique autonome.

Le terminal situé à distance peut être unique, mais on peut également prévoir que la surveillance des ruches équipées du dispositif de l'invention puisse être effectuée simultanément à partir d'une multitude de terminaux de surveillance.

Selon une forme d'exécution préférée de l'invention, les moyens autonomes d'émission/réception sont également contenus dans le boîtier. On obtient ainsi un dispositif extrêmement compact, puisqu'il est entièrement compris dans un seul et même boîtier qui est disposé facilement par l'apiculteur sous une ruche existante, sans besoin de connexion particulière et encore moins de modification de la ruche.

Avantageusement, les moyens de détection de paramètres physiques comprennent au moins un capteur de poids de la ruche disposé à la surface supérieure du boîtier. Le capteur de poids (ou les capteurs), bien qu'il puisse être complété par d'autres capteurs de type différents, permettra de donner une indication précise à l'apiculteur de l'évolution du poids de la ruche, et donc des informations sur la vie de la colonie comme par exemple, l'évolution du stock de nourriture l'hiver ou l'indication sur l'existence d'une miellée l'été.

Les moyens de détection de paramètres physiques peuvent également comprendre au moins un capteur de température extérieure à la ruche, et/ou au moins un capteur d'humidité, et/ou au moins un capteur de pression atmosphérique.

Selon une forme d'exécution préférée de l'invention, le terminal de surveillance à distance est un téléphone cellulaire de type GSM, et les moyens d'émission/réception de données vers/depuis le terminal de commande à distance comprennent un module électronique de conversion des données mesurées en signaux compatibles avec la norme GSM ou équivalente, et un module de transmission des données sous forme de messages courts de type "SMS".

De préférence, les moyens d'alimentation électrique autonomes comportent au moins un panneau solaire disposé à proximité du boîtier et en liaison avec celui-ci, ainsi qu'une batterie rechargeable disposée dans le boîtier et connectée au panneau solaire.

Néanmoins, on pourrait prévoir d'autres types de moyens d'alimentation électrique autonomes, par exemple une batterie longue durée (plusieurs mois). Une telle batterie permettrait une alimentation autonome de longue durée lorsque la ruche est placée dans un endroit peu exposé aux rayons du soleil tel qu'une clairière, voire dans un bois, ou encore l'hiver lorsque l'ensoleillement n'est pas suffisant pour permettre le fonctionnement d'un panneau solaire.

Avantageusement, le dispositif selon l'invention comporte des moyens électroniques d'identification permettant au terminal de surveillance de le distinguer d'autres dispositifs de surveillance identiques et/ou inversement, au dispositif d'identifier le terminal de surveillance à distance. Ainsi, chaque ruche équipée d'un dispositif de surveillance est identifiée simultanément mais indépendamment des autres ruches. Dès lors, il est facile pour l'apiculteur d'utiliser le terminal de surveillance à distance, par exemple son téléphone portable, et d'interroger chaque ruche à l'aide d'un code d'identification pour connaître les paramètres physiques de la ruche et/ou de son environnement à un instant donné.

Avantageusement, le boîtier du dispositif selon l'invention comprend une unité électronique de calcul reliée aux moyens de détection de paramètres physiques. Cette unité de calcul permet notamment d'établir des moyennes des paramètres physiques détectés pour la ruche et/ou son environnement, par exemple des moyennes de poids de la ruche sur des intervalles de temps donnés. Une mémoire associée à l'unité de calcul permet de conserver ces données et de les transmettre au terminal de surveillance lorsque l'apiculteur lance une interrogation de la ruche à partir de ce dernier. Selon la programmation de l'unité de calcul, celle-ci peut également établir des données prospectives c'est-à-dire suggérer une évolution de certains paramètres physiques de la ruche et/ou de son environnement.

Enfin, il est possible de programmer un code d'identification géré par l'électronique du boîtier, ledit code permettant de garantir que le terminal de surveillance est bien autorisé à communiquer avec le boîtier. Ceci permet de garantir la confidentialité de l'information car ainsi le dispositif n'accepte de commande et ne transmet de données qu'à un terminal distant qui s'est auparavant authentifié correctement lors de la connexion entre ledit terminal à distance et le boîtier.

Les protocoles de transmission des données entre le boîtier et le terminal ne seront pas détaillés dans la présente description car ils sont connus en soi.

Comme on l'aura compris, la communication entre les dispositifs de surveillance et le terminal de commande sont à double sens.

Pour sa bonne compréhension, l'invention va à présent être décrite en détail, en référence au dessin schématique annexé, représentant à titre d'exemple non limitatif, une forme particulière d'exécution d'un dispositif de surveillance de ruche selon l'invention.

La figure 1 est une vue en perspective d'une ruche équipée d'un dispositif de surveillance selon la présente invention ;

La figure 2 est une vue schématique en coupe d'un dispositif selon l'invention.

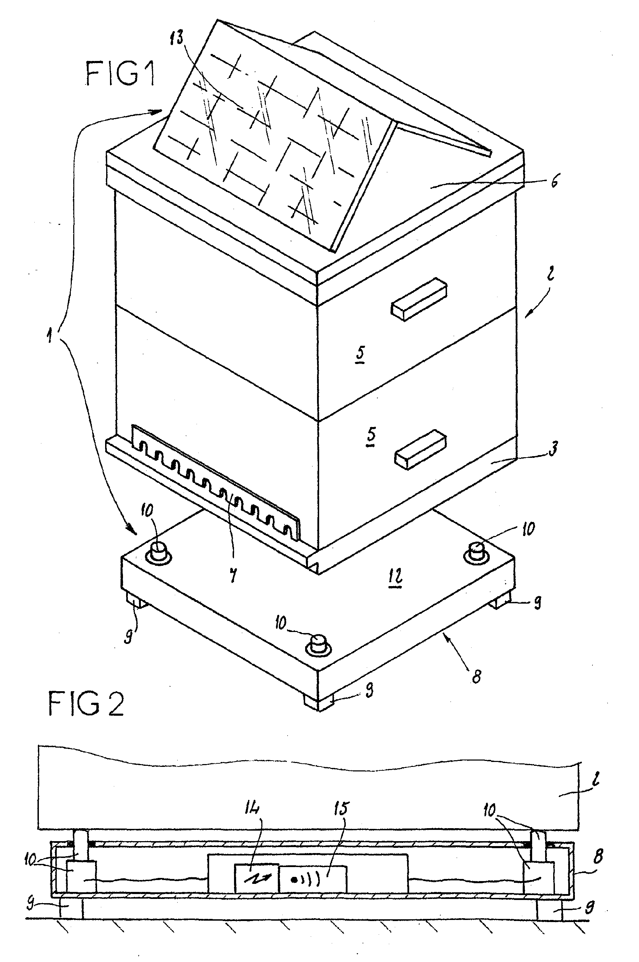

Le dispositif de surveillance 1 selon l'invention tel qu'illustré à la figure 1 est associé à une ruche 2 existante. La ruche 2 comprend un socle 3, des parois latérales définissant un ou plusieurs étages 5 et une paroi supérieure 6 amovible pour permettre à l'apiculteur d'accéder aux cadres disposés à l'intérieur de la ruche (non illustrés au dessin). La ruche 2 comprend une grille d'accès 7 l'intérieur de la ruche pour les abeilles. La structure des ruches, par exemple de type Dadant, est bien connue, et ne fera donc pas l'objet d'une description détaillée.

Le dispositif 1 tel qu'illustré à la figure 1, comprend un boîtier 8 muni de pieds 9 permettant de le décoller du sol, et d'éviter les infiltrations d'eau lors de violents orages. En temps normal, le boîtier 8 est étanchéifié, de sorte que les composants électroniques disposés à l'intérieur soient protégés de projections d'eau, de poussière, de pollen, ou de la pénétration d'insectes à l'intérieur du boîtier. L'étanchéification peut être réalisée de toute manière appropriée, par exemple par l'application de résine polymère à la surface intérieure ou extérieure du boîtier.

Le boîtier 8 contient des moyens de détection 10 de paramètres physiques caractéristiques à un instant donné de la ruche et/ou de son environnement comme montré à la figure 2.

Plus précisément, ces moyens de détection 10 de paramètres physiques consistent en quatre capteurs de poids 10, disposés à la surface supérieure 12 du boîtier 8 et faisant saillie par rapport à elle, de manière à supporter seuls le poids de la ruche. La mise en place du dispositif de surveillance est donc simple et rapide puisqu'il suffit de poser la ruche 2 sur le boîtier 8 de sorte que les capteurs 10 supportent seuls et entièrement le poids de la ruche.

Le dispositif comprend également des moyens permettant l'alimentation électrique autonome du dispositif.

Ces moyens d'alimentation électrique autonomes comportent un panneau solaire 13 disposé à proximité du boîtier 8, par exemple sur la ruche comme illustré à la figure 1, et en liaison avec celui-ci. Les moyens d'alimentation autonome comportent de plus une batterie électrique rechargeable 14 qui est disposée dans le boîtier 8 et connectée au panneau solaire 13 situé à l'extérieur.

Comme illustré à la figure 2, le boîtier 8 contient également des moyens 15 d'émission de données et/ou de réception de commandes, respectivement vers et/ou en provenance d'au moins un terminal de surveillance placé à distance (non illustré au dessin).

Le terminal de surveillance à distance est un téléphone cellulaire de type GSM, et les moyens d'émission/réception de données vers/depuis le terminal de commande à distance comprennent un module électronique de conversion des données mesurées en signaux compatibles avec la norme GSM, et un module de transmission des données sous forme de messages courts de type "SMS".

Outre les paramètres physiques de la ruche ou de son environnement, il est également possible à partir du terminal de surveillance, de lire l'ensemble des paramètres de fonctionnement du dispositif, ainsi que les paramètres de configuration. Il est aussi possible à l'aide du terminal de surveillance à distance, de modifier la configuration de fonctionnement du dispositif par reprogrammation. Pour toutes ces opérations, l'apiculteur envoie simplement un message court ("SMS") à partir de son téléphone portable, au numéro attribué au boîtier. Ce message, une fois reçu par le dispositif, est converti en une commande par l'électronique de calcul interne de l'appareil qui retourne, le cas échéant, des informations par SMS au terminal qui a émis la commande.

Le dispositif 1 selon l'invention comporte des moyens électroniques d'identification permettant au terminal de surveillance de le distinguer d'autres dispositifs de surveillance identiques, ainsi qu'une unité électronique de calcul à mémoire, reliée aux moyens de détection de paramètres physiques du dispositif. Cette unité de calcul permet d'établir des moyennes à partir du poids de la ruche détecté sur un intervalle de temps donné. Ainsi, en réalisant des mesures ponctuelles de poids de la ruche toutes les cinq minutes, il est possible d'obtenir un poids moyen de la ruche sur une heure, six heures, ou vingt-quatre heures par exemple, avec une indication des variations de poids en positif ou négatif, ce qui permet de déduire facilement le taux d'activité de la ruche, ainsi que la survenue d'une miellée.

A la lecture de ce qui précède, on aura compris que l'invention résout efficacement les inconvénients des systèmes existants décrits en préambule. Particulièrement, le dispositif de surveillance selon la présente invention est très économique et facile d'installation. En effet, la simple mise en place du boîtier sous la ruche, et des moyens d'alimentation électrique du type panneau solaire à proximité permet la mise en fonction du système de surveillance. Comme on l'a vu, un simple téléphone portable peut suffire au recueil des données en provenance des ruches équipées de dispositifs de surveillance, ce qui évite alors l'achat par l'apiculteur d'un matériel informatique ou électronique spécifique en tant que terminal de commande.

Il va de soi que l'invention n'est pas limitée à la forme de réalisation décrite ci-dessus à titre exemple mais qu'elle en embrasse au contraire toutes les variantes. Ainsi, outre le poids de la ruche, de nombreux autres paramètres peuvent être détectés, notamment la température autour de la ruche, la pluviométrie, la pression atmosphérique, ou l'ensoleillement.

De plus, le terminal de surveillance peut être non pas un téléphone cellulaire mais un ordinateur équipé pour l'émission ou la réception de messages de type SMS vers, respectivement depuis, un dispositif de surveillance selon l'invention.

La norme de transmission décrite ci-dessus entre un boîtier de surveillance et le terminal n'est pas limitée aux SMS, mais peut être adaptée.

Enfin, il est possible de placer entre le boîtier de l'invention et la ruche, un plateau, en particulier lorsque la surface inférieure de la ruche est irrégulière, de manière à s'assurer que le ou les capteurs du boîtier supportent correctement et seuls le poids de la ruche.

## Revendications

1. Dispositif (1) permettant la surveillance à distance d'une ruche (2), **caractérisé en ce qu'**il comprend un boîtier (8) formant un socle amovible pour la ruche et contenant des moyens de détection de paramètres physiques (10) caractéristiques à un instant donné de la ruche et/ou de son environnement, et **en ce qu'**il comprend d'une part des moyens (15) d'émission de données et/ou de réception de commandes, respectivement vers et/ou en provenance d'au moins un terminal de surveillance placé à distance, et d'autre part des moyens (13, 14) permettant son alimentation électrique autonome.

2. Dispositif (1) selon la revendication 1, **caractérisé en ce que** les moyens (15) d'émission/réception sont également contenus dans le boîtier (8).

3. Dispositif (1) selon les revendications 1 ou 2, **caractérisé en ce que** les moyens de détection de paramètres physiques (10) comprennent au moins un capteur de poids de la ruche disposé à la surface supérieure (12) du boîtier (8).

4. Dispositif (1) selon la revendication 3, **caractérisé en ce que** les moyens de détection de paramètres physiques (10) comprennent également au moins un capteur de température extérieure à la ruche, et/ou au moins un capteur d'humidité, et/ou au moins un capteur de pression atmosphérique.

5. Dispositif (1) selon les revendications 1 à 4, **caractérisé en ce que** le terminal de surveillance à distance est un téléphone cellulaire de type GSM, et **en ce que** les moyens (15) d'émission/réception de données vers /depuis le terminal de commande à distance comprennent un module électronique de conversion des données mesurées en signaux compatibles avec la norme GSM ou équivalente, et un module de transmission des données sous forme de messages courts de type "SMS".

6. Dispositif (1) selon l'une quelconque des revendications 1 à 5, **caractérisé en ce que** les moyens (13, 14) d'alimentation électrique autonome comportent au moins un panneau solaire (13) disposé à proximité du boîtier (8) et en liaison avec celui-ci, ainsi qu'une batterie rechargeable (14) disposée dans le boîtier et connectée au panneau solaire.

7. Dispositif (1) selon l'une quelconque des revendications 1 à 5, **caractérisé en ce que** les moyens (13, 14) d'alimentation électrique autonome comportent au moins une pile ou batterie longue durée.

8. Dispositif (1) selon les revendications 1 à 7, **caractérisé en ce qu'**il comporte des moyens électroniques d'identification permettant au terminal de surveillance de le distinguer d'autres dispositifs de surveillance identiques et/ou inversement, au dispositif d'identifier le terminal de surveillance à distance.

9. Dispositif (1) selon l'une quelconque des revendications 1 à 8, **caractérisé en ce que** le boîtier comprend une unité électronique de calcul à mémoire, reliée aux moyens de détection de paramètres physiques du dispositif.
